Europäisches Patentamt

European Patent Office

Office européen des brevets

(11) Publication number: **0 263 077 A1**

## (12) EUROPEAN PATENT APPLICATION

(21) Application number: **87830305.6**

(22) Date of filing: **31.07.87**

(51) Int. Cl.⁴: **C 12 G 1/02**

(30) Priority: **16.09.86 IT 57586**

(43) Date of publication of application:
**06.04.88 Bulletin 88/14**

(84) Designated Contracting States:
**AT BE CH DE ES FR GB GR IT LI LU NL SE**

(71) Applicant: **Di Sabatino, Marino**
**Via Miano, 27**
**I-60100 Ancona (IT)**

(72) Inventor: **Di Sabatino, Marino**
**Via Miano, 27**
**I-60100 Ancona (IT)**

(54) **Container for making wine and for taking out the dregs from the same container, without pouring off the wine.**

(57) Container for making wine, to extract the wine dregs without decanting; for drawing from the container even in small quantities at a time. The cone which has a diameter that is not necessarily proportional to its height but sufficiently slanted to allow the dregs to slide down and deposit on the bottom, is connected to the cylinder thereby forming the cylinder in question.

Naturally the container is used by placing it vertically on two parallels in appropriate supports (two or four etc.)

No 8 (in the table of the drawing) indicates a possible 4th tap because the floating cover operates as the level of the wine drops. When the level reaches the point of juncture between the cylinder and the cone, the float stops operating and therefore the wine which remains (remaining wine) should be removed as otherwise it will become vinegar.

All the taps should be made of stainless steel.

Fig. 1.

EP 0 263 077 A1

**Description**

Container for making wine

APPLICATION for correcting and integrating the patent application N°575B/86 registered in Ancona on 16/9/1986.

Container for making wine and for extracting wine dregs.

The container has a cylindrical conical shape and has three taps.

One tap is for the wine. one is for intake of air and one is for the expulsion of dregs.

DESCRIPTION

A composition of the following parts: N° 1 conical section, N° 2 cylinder connected to cone, N° 3 float cover, N° 4 top cover, N° 5 tap for air intake, N° 6 tap for wine intake, N° 7 tap for expulsion of dregs, N° 8 for removal of the remaining wine, N° 9 two of the base supports, N° floating cover vertical to the slanted section, N° 3 prospectus floating cover with spacer beaks.

UTILITY

The container is exceptionally useful. The dregs are extracted from the container without any contact whatsover with the wine and consequently with many advantages for the producer, the wine and the consumer.

MORE SPECIFICALLY this means that no decanting is necessary once or twice until the wine is finished: NO other containers are required thereby saving on working space and time.

ADVANTAGES

A wide range of advantages which should be evaluated carefully deriving from the fact that the wine can be drawn from the container in small quantities at a time. This is a great advantage in itself. Many who would not otherwise be able to, for reasons of space and experience can use it. It can also be used by wine-sellers, who can draw it for their clients on request thereby offering clients maximum safety.

The wine which can not be removed from the container (by keeping to the instructions indicated in this respect) until it is finished, is not contaminated either by air or by other containers and it is therefore not necessary to use metabisulfite or other additives. The wine will in addition not pass through pumps or asbestos filters - this is truly a pure wine.

USE: pour the must carefully into the container ensuring that no pips, skin or other solid matter is poured in with the must. The wine is left to ferment for several or more days. It is essential for the floating cover (duly wash and dried) to be fitted after fermentation. Add a little appropriate wine making oil between the side of the cylinder and the floating cover so that there is approximately one centimeter above the wine (a $1/2$ liter in the case of a 10 ql container).

The dregs are expelled gradually and this after a week or more from fermentation; open the tap N° 7 below very abrubtly and close as soon as the wine comes out. Repeat this procedure several times at intervals of 15, 20 and 30 days.

The floating cover should have a slightly slanted bottom - it should not be flat. It should not be deeper than four centimeters. The spacers should be no longer than 4 millimeters.

IMPORTANT when drawing the wine or dregs from the container ensure that the air tap is open (close it again after the first operation).

CONSTRUCTION: the container may be constructed in any material as long as the material used does not affect the product; stainless steel plate is undoubtedly the best material to use: other materials are vitrified concrete, fibreglass or plastic (?) or mixed materials like steel and wood, steel and glass or wood and glass.

The container may be constructed in different sizes: from very small to very large sizes but remember that the cone should not be too open in order to ensure that the dregs slide toward the bottom: IMPORTANT the opening of the cone below (for the dregs) N° 7 should be proportional in size to the container; e.g. a 10 ql. container should have a 2 inch tap. Sizes must be proportional.

COMPARISON: traditionally wine is made by decanting from one container to another until it is finally bottled for consumption. It is passed through pumps and filters (asbestos) thereby making the wine vulnerable so that additives like metabisulfite and others have to be used (an so on). This all naturally involves work, time space, a greater number of containers and naturally the quality of the wine; finally wine experts are required to make traditional wine.

Report on the utility of the container and how to use it.

Place the must without any grape skins into the container and wait until it has fermented completely and fit the float immediately it has done so. Add a glass of wine-making oil between the sides of the container and the float so that the wine does not come into contact with the air: If fermentation does not start, the top cover may be fitted in order to protect the carbon dioxide which accumulates between the float and the cover thereby creating a self-defence mechanism against possible dangerous bacteria in the air.

If the wine is clear and two months after fermentation has been completed, open the tap below - N° 1; if the dregs come out close the tap carefully; repeat this procedure of opening the tap several times at intervals of 20 days.

Important: before opening either of taps 1 or 2 remember to firstly open the air tap to prevent that the air which fills the vacuum created by the wine or dregs which are drawn does not pass through the taps. This would mean passing through the wine and therefore filtering with the wine itself which is precisely what we wish to avoid, in other words, harmful impurity of the wine.

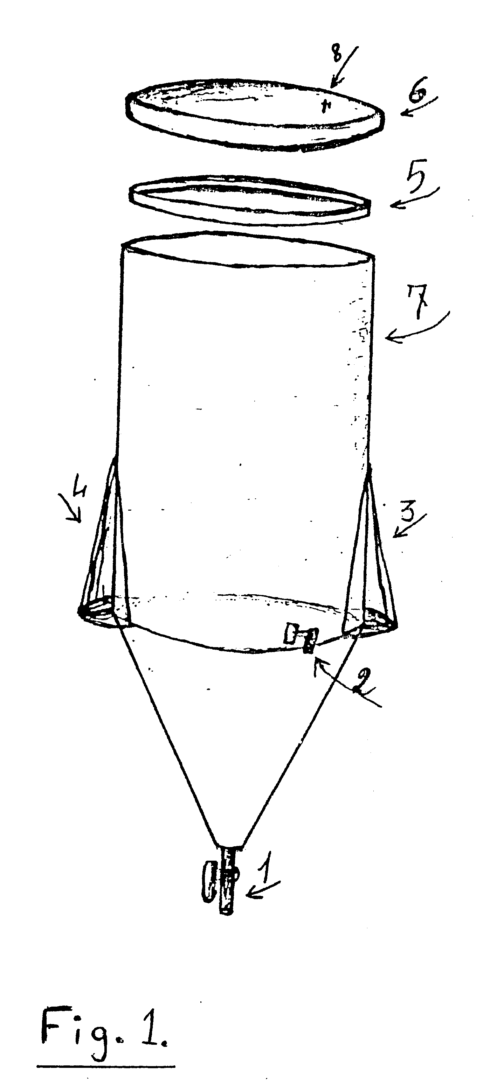

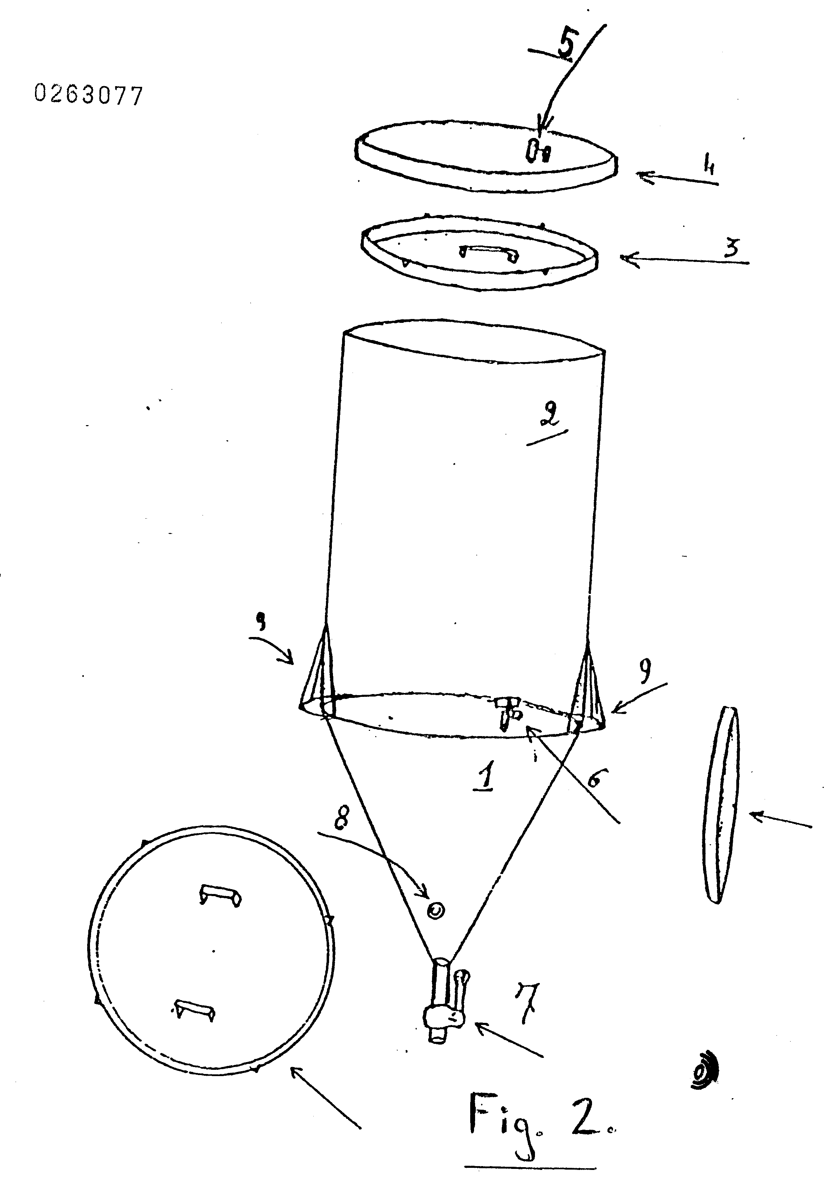

NEVER introduce foreign bodies like straws, siphons etc. into the wine. The air intake tap should naturally be closed as soon as the drawing taps have been used. The container is much much more useful than the traditional wine cask.

First and most important advantage is the purify and hygiene of the wine, followed by the fact that no decanting work is necessary and no other barrels or containers are required. The wine may be drawn in small quantities at a time and it will always be wholesome and pure with no danger of it going bad. If good quality wine is used it is not necessary to use additives like metabisullfite etc. The space required for making wine is reduced at least by half. I feel that this container resolves many disadvantageous problems related to wine making.

**Claims**

1. The dregs are extracted from the container without touching the wine and without decanting. The container has a cylindrical conical shape with internal floating cover, closing cover, three different taps for air and wine intake and for removing the dregs respectively. Besides the above CHARACTERISTICS I wish to mention the additional feature of being able drawing wine from the container in small quantities at a time. No additives need to used. As far as the taps in the respective positions are concerned, see the table on the enclosed drawing.

I hereby request that the container described be protected with particular reference to those points which involve an invention especially the expulsion of dregs without contact with the wine.

INDEPENDENT CLAIMS

2. These involve the fact that mine is idea of connecting the cone to the base of the container so that the dregs (and by physical law) are concentrated at the point required, so that I can extract the dregs with an output which is proportional to the container.

Naturally this involves reference N°7 of the drawing, the tap below the cone. I hereby request that the invention (different parts of the invention) be protected especially the expulsion of dregs wihtout contact with the wine in consideration of the advantages which have already been described.

0263077

Fig. 1.

0263077

Fig. 2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | FR-A-2 522 677 (G. MARCELLI) <br> * Whole document * <br> --- | 1,2 | C 12 G 1/02 |
| Y | FR-A- 578 174 (M. SEMICNON et al.) <br> * Claims; figures * <br> --- | 1,2 | |
| Y | FR-A-2 343 047 (P. LEJEUNE) <br> * Claims; figures * <br> --- | 1,2 | |
| A | FR-A-1 418 027 (P. DUBOURDIEU) <br> * Claims; figures * <br> ----- | 1,2 | |

TECHNICAL FIELDS SEARCHED (Int. Cl.4)

C 12 G
C 12 H

The present search report has been drawn up for all claims

| Place of search | Date of completion of the search | Examiner |
|---|---|---|
| THE HAGUE | 20-01-1988 | COUCKE A.O.M. |